# EUROPÄISCHE PATENTSCHRIFT

(11) **EP 4 367 484 B1**
(45) Veröffentlichungstag und Bekanntmachung des Hinweises auf die Patenterteilung: **29.01.2025**
(21) Anmeldenummer: 22786804.9
(22) Anmeldetag: 22.09.2022
(51) Int. Cl.: G01F 1/66, G01F 25/00, G01F 1/667

(54) **KALIBRIERVERFAHREN FÜR EIN DURCHFLUSSMESSSYSTEM, DURCHFLUSSMESSSYSTEM UND COMPUTERPROGRAMMPRODUKT**
CALIBRATION METHOD FOR A FLOW MEASUREMENT SYSTEM, FLOW MEASUREMENT SYSTEM AND COMPUTER PROGRAM PRODUCT
PROCÉDÉ D'ÉTALONNAGE POUR SYSTÈME DE MESURE DE DÉBIT, SYSTÈME DE MESURE DE DÉBIT ET PRODUIT PROGRAMME D'ORDINATEUR

(30) Priorität: 22.10.2021 DE 102021211941
(43) Veröffentlichungstag der Anmeldung: 15.05.2024
(73) Patentinhaber: Siemens Aktiengesellschaft, 80333 München (DE)
(72) Erfinder: KIEFER, Jürgen, 76646 Bruchsal (DE); WILKENING, Wilko, 91052 Erlangen (DE)
(74) Vertreter: Siemens Patent Attorneys
(86) Internationale Anmeldenummer: PCT/EP2022/076399
(87) Internationale Veröffentlichungsnummer: WO 2023/066594

(56) Entgegenhaltungen:
- EP-B1- 2 534 454
- CA-A1- 3 124 021
- CN-A- 112 067 066
- DE-A1- 102007 019 689
- US-A1- 2017 153 136
- US-A1- 2020 326 216

## Beschreibung

Die Erfindung betrifft ein Kalibrierverfahren für ein Durchflussmesssystem. Ebenso betrifft die Erfindung ein Durchflussmesssystem, das zum Durchführen eines derartigen Kalibrierverfahrens geeignet ist. Ferne betrifft die Erfindung ein Computerprogrammprodukt zum Simulieren eines Betriebsverhaltens eines korrespondierenden Durchflussmesssystems.

Aus der Offenlegungsschrift DE 10 2009 002 942 A1 ein Verfahren zur Bestimmung einer Rohrwanddicke eines Messrohrs in einem Coriolis-Durchflussmessgerät. Das Messrohr gehört zu einem mechanischen Schwingungssystem, das durch einen Erreger zu Schwingungen anregbar ist. Die Rohrwanddicke wird anhand einer erfassten Anregungs-Eingangsgröße und einer Ansprechgröße des Schwingungssystems ermittelt, die in eine Transfergleichung eingesetzt werden.

Die Druckschrift DE 10 2015 107 752 A1 offenbart ein Verfahren zur Ermittlung einer Rohrwandresonanzfrequenz einer Rohrleitung im Bereich einer Messtelle. Das Verfahren umfasst ein Aussenden eines Ultraschallsignals und ein Erfassen eines Empfangssignals. Basierend auf einer Übertragungsfunktion einer Messstelle wird die Rohrwandresonanzfrequenz ermittelt. Ausgehend hiervon ist eine Rohrwandstärke und/oder ein Rohrwandmaterial ermittelbar.

Die Patentanmeldung DE 10 2007 019 689 A1 offenbart eine Vorrichtung zur Bestimmung eines Volumenstroms eines Mediums, die über zwei entlang entlang einer Rohrachse angeordnete Ultraschallsensoren verfügt, über die zum Messen des Volumenstroms Ultraschallpulse diagonal in das Rohr emittierbar sind. Zumindest einer der Ultraschallsensoren verfügt über piezoelektrische Elemente, die als Diagnosesensoren dienen, die dazu eingerichtet sind, zur Ermittlung von Diagnosedaten Ultraschallpulse senkrecht zur Rohrachse in das Rohr zu emittieren.

Aus der Veröffentlichungsschrift US 2020/0326216 A1 ist ein Ultraschall-Durchflussmesser bekannt, der mehrere piezoelektrische Transducer aufweist. Ein erster und zweiter piezoelektrischer Transducer sind dazu eingerichtet, Ultraschallpulse schräg in ein Rohr zu senden, auf dem der Ultraschall-Durchflussmesser befestigt ist. Ein dritter piezoelektrischer Transducer ist zwischen dem ersten und zweiten Transducer positioniert und dazu eingerichtet, Ultraschallpulse senkrecht zur Rohrachse zu senden und zu empfangen. Ausgehend hiervon ist ein Innendurchmesser des Rohrs ermittelbar.

US 2017/0153136 A1 zeigt einen auf einem Rohr aufklemmbaren Durchflussmesser, der eine automatische Funktion zur Ermittlung einer Rohrwandstärke aufweist. Hierzu wird bei einem Durchstreichen eines Frequenzspektrums eine Resonanzfrequenz angeregt und erfasst. Basierend hierauf und einer Angabe eines Rohraußendurchmessers und einer Materialangabe über die Rohrwandung wird die Rohrwandstärke ermittelt.

Durchflussmessgeräte werden in einer Vielzahl an Anwendungen, wie beispielsweise Prozessanlagen, eingesetzt um Fließgeschwindigkeiten bzw. Durchsätze in Rohren zu messen. Es werden hierbei steigende Anforderungen an die Messgenauigkeit, die Langlebigkeit und Montagefreundlichkeit gestellt. Der Erfindung liegt die Aufgabenstellung zugrunde, ein Durchflussmesssystem und ein zugehöriges Kalibrierverfahren bereitzustellen, das in zumindest einem der skizzierten Aspekte eine Verbesserung bietet.

Die Aufgabenstellung wird durch ein erfindungsgemäßes Verfahren zum Kalibrieren eines Durchflussmesssystems gelöst. Das Durchflussmesssystem ist auf einem Rohr montiert, das in seinem Lumen ein Medium umschließt, dessen Durchfluss, und damit dessen Fließgeschwindigkeit, zu messen ist. Das Medium kann beispielsweise ein Gas, eine Flüssigkeit, eine Suspension, ein Schaum, oder ein Dickstoff sein. Das Verfahren umfasst einen ersten Schritt, in dem das Durchflussmesssystem in einem aktiven Betriebszustand bereitgestellt wird und zu einer nichtinvasiven Durchflussmessung geeignet ist. Das Durchflussmesssystem umfasst einen ersten Durchflusssensor, der auf dem Rohr montiert ist. Im aktiven Zustand ist der erste Durchflusssensor dazu geeignet, einen Ultraschallpuls durch eine Rohrwandung in das Lumen des Rohrs auszusenden.

Das Verfahren umfasst auch einen zweiten Schritt, in dem ein Ultraschallpuls mittels eines ersten oder zweiten Ultraschallkopfs in die Rohrwandung ausgesendet wird. Der Ultraschallpuls ist unmittelbar in die Rohrwandung im Bereich der Ultraschallköpfe einleitbar. Der erste und zweite Ultraschallkopf gehören zum ersten Durchflusssensor und sind diesem zugeordnet. Der ausgesendete Ultraschallpuls durchquert die Rohrwandung und wird an einer Innenseite der Rohrwandung reflektiert. Der reflektierte Ultraschallpuls wird im zweiten Schritt mittels des zweiten Ultraschallkopfs als Ultraschallecho empfangen. Zwischen dem Aussenden des Ultraschallpulses und dem Empfangen des Ultraschallechos liegt damit eine Signallaufzeit, in der die Rohrwandung zweimal durchquert wird. Ebenso weist das Verfahren einen dritten Schritt auf, in dem die Signallaufzeit des Ultraschallpulses bzw. Ultraschallechos ermittelt wird. Basierend auf der Signallaufzeit wird im dritten Schritt eine Rohrwandstärke ermittelt. Hierzu wird zumindest ein Ausrichtungswinkel zwischen einer Rohrachse und einer Ausbreitungshauptrichtung des Ultraschallpulses berücksichtigt. Dadurch besteht ein berechenbarer Zusammenhang zwischen der Signallaufzeit und der Rohrwandstärke. Ergänzend ist anhand der Rohrwandstärke und einer Angabe über den Rohraußendurchmesser ein Rohrinnendurchmesser im dritten Schritt ermittelbar. Eine solche Angabe ist beispielsweise durch eine Benutzereingabe bereitstellbar.

Des Weiteren umfasst das Verfahren einen vierten Schritt, in dem zumindest ein Kalibrierparameter des ersten Durchflusssensors eingestellt wird. Der zumindest eine Kalibrierparameter umfasst hierbei die im dritten Schritt ermittelte Rohrwandstärke und/oder der Rohrinnendurchmesser. Ultraschallköpfe bieten ein erhöhtes Maß an Messgenauigkeit, so dass die Rohrwandstärke durch das erfindungsgemäße Verfahren mit gesteigerter Präzision ermittelbar ist. Das Verfahren kann selbsttätig durchgeführt werden, was ein schnelles Nachkalibrieren des Durchflussmesssystems während des Betriebs erlaubt. Insbesondere ist das Durchflussmesssystem an veränderliche Rohrwandstärken, und damit veränderliche Rohrinnendurchmesser, anpassbar. Die Rohrwandstärke kann durch Korrosion der Rohrwandung reduziert sein, oder durch Verunreinigungen an der Rohrwandung erhöht sein. Darüber hinaus werden Rohrwandungen mit reduzierter Präzision hergestellt, so dass eine exakte Rohrwandstärke häufig nicht bekannt ist. Mittels des erfindungsgemäßen Verfahrens sind die Auswirkungen derartiger Effekte auf die Messgenauigkeit des Durchflussmesssystems ausgleichbar. Das Einstellen des zumindest einen Kalibrierparameters kann beispielsweise durch Speichern entsprechender Werte in einer Auswertungseinheit des Durchflussmesssystems erfolgen.

Erfindungsgemäß wird der Ultraschallpuls im zweiten Schritt des Verfahrens, bezogen auf die Rohrachse, in einer Diagonalrichtung in das Medium, und damit in die Rohrwandung, ausgesendet. Des Weiteren können der zweite Ultraschallkopf und der Ultraschallreflektor in Bezug auf den ersten Ultraschallkopf derart angeordnet sein, dass die Ausbreitungshauptrichtungen des Ultraschallpulses und des Durchflussmesspulses kreuzungsfrei sind. Mittels des Ultraschallreflektors wird so in einfacher Weise ein Messbetrieb bei gleichzeitiger Durchführung des beanspruchten Verfahrens gewährleistet. Das erfindungsgemäße Aussenden des Ultraschallpulses in das Medium, und damit in die Rohrwandung, in einer Diagonalrichtung erlaubt eine Ermittlung einer Oberflächenrauigkeit an einer Innenseite der Rohrwandung. Dazu ist eine Intensität des im zweiten Schritt empfangenen Ultraschallechos erfassbar. Diese wird mit einer Intensität des ausgesendeten Ultraschallpulses verglichen. Je rauer die Innenseite der Rohrwandung ist, umso stärker ist die Reflexion zurück an den zweiten Ultraschallkopf. Je niedriger das Verhältnis aus der Intensität des empfangenen Ultraschallechos und der Intensität des ausgesendeten Ultraschallpulses beispielsweise ist, umso geringer ist die Oberflächenrauigkeit der Innenseite der Rohrwandung. Basierend hierauf ist die Oberflächenrauigkeit der Innenseite der Rohrwandung ermittelbar. Dazu kann eine Wertetabelle und/oder eine Angabe über das Material der Rohrwandung berücksichtigt werden. Dies erlaubt, insbesondere bei einer Anwendung der Hagen-Poiseuille-Gleichung, eine präzise Ermittlung des Durchsatzes an Medium im Rohr. Die ermittelte Oberflächenrauigkeit der Innenseite der Rohrwandung wird im vierten Schritt erfindungsgemäß als Kalibrierparameter eingestellt. Die mit dem beanspruchten Verfahren erzielbare Genauigkeit durch Kalibrierung wird so weiter gesteigert. Darüber hinaus können auch weitergehende Analysen zur Ermittlung der Rohrwandstärke und der Oberflächenrauigkeit durchgeführt werden.

In einer Ausführungsform des beanspruchten Verfahrens ist dem zweiten Ultraschallkopf des ersten Durchflusssensors ein Ultraschallreflektor zugeordnet, der zu einem Umlenken des Ultraschallpulses, der im zweiten Schritt ausgesendet wird, geeignet ist. Durch das Umlenken ist der Ultraschallpuls, anhand dessen die Rohrwandstärke zu ermitteln ist, von einem Durchflussmesspuls weglenkbar. Dadurch ist eine räumliche Überlagerung des Ultraschallpulses mit dem Durchflussmesspuls vermeidbar. Folglich ist ein gleichzeitiger Messbetrieb und ein Durchführen des beanspruchten Verfahrens möglich. Des Weiteren weist der Ultraschallreflektor Abmessungen auf, die einem Mehrfachen einer Wellenlänge des Ultraschallpulses entspricht. Darüber hinaus ist der Ultraschallpuls durch den Ultraschallreflektor in einfacher Weise in eine für die Bestimmung der Rohrwandstärke günstigen Richtung möglich.

In einer weiteren Ausführungsform des beanspruchten Verfahrens kann der erste Ultraschallkopf zu einem Aussenden des Durchflussmesspulses ausgebildet sein. Der erste Ultraschallkopf ist infolgedessen unabhängig vom zweiten Ultraschallkopf betreibbar. Der erste und zweite Ultraschallkopf sind somit für ihre jeweiligen Aufgaben optimiert ausbildbar. Dies erlaubt für den ersten und zweiten Ultraschallkopf die Verwendung simpler und kosteneffizienter Ultraschallköpfe. Alternativ oder ergänzend können der erste und zweite Ultraschallkopf auch als kombinierter Ultraschallkopf integriert ausgebildet sein. Insbesondere können der erste und zweite Ultraschallkopf als unabhängig ansteuerbare Segmente des kombinierten Ultraschallkopfs ausgebildet sein. Ferner können der erste und zweite Ultraschallkopf ein gemeinsames Piezoelement nutzen, die segmentweise über unabhängige Elektroden ansteuerbar sind. Ein solcher kombinierter Ultraschallkopf ist kompakt und bietet damit eine Platzersparnis. In einem Durchflussmesssystem ist es ausreichend, wenn nur der erste Durchflusssensor dazu ausgebildet ist, das beanspruchte Verfahren durchzuführen. Eine entsprechende Anpassung eines zweiten Durchflusssensors ist entbehrlich. Das beanspruchte Verfahren ist insgesamt an unterschiedliche Erfordernisse in puncto Kompaktheit und Kosteneffizienz anpassbar.

Ferner kann der Ultraschallpuls, der im zweiten Schritt ausgesendet wird, durch ein elektronisches Filter, insbesondere ein Bandpassfilter, vom Durchflussmesspuls unterschieden werden. Das elektronische Filter ist in der Auswertungseinheit des Durchflussmesssystems ausgebildet. Dies erlaubt es, das beanspruchte Verfahren gleichzeitig zu einem Messbetrieb durchzuführen. Dabei können auch Überlagerungen zwischen dem Durchflussmesspuls und dem Ultraschallpuls bzw. dessen Ultraschallecho hingenommen werden. Dadurch kann ein über Zeitscheiben koordinierter Betrieb des ersten und zweiten Ultraschallkopfes vermieden werden. Beispielsweise können der Durchflussmesspuls und der Ultraschallpuls unterschiedliche Frequenzen aufweisen oder unterscheidbare Pulsmuster. Das elektronische Filter kann durch elektronische Komponenten und/oder einen Algorithmus im Durchflussmesssystem ausgebildet sein.

Alternativ oder ergänzend können der Ultraschallpuls und der Durchflussmesspuls durch zeitversetztes Aussenden unterscheidbar ausgebildet sein. Der erste und zweite Ultraschallkopf werden dabei in einem Zeitscheibenbetrieb betrieben. Dadurch, dass die Rohrwandstärke geringer ist als der Rohrinnendurchmesser, ist eine Signallaufzeit des Ultraschallpulses, anhand dessen die Rohrwandstärke ermittelt wird, kürzer als eine Signallaufzeit eines Durchflussmesspulses, mit dem Fließgeschwindigkeit des Mediums gemessen wird. Eine erste Zeitscheibe zum Messen der Rohrwandstärke kann kürzer ausgebildet sein als eine zweite Zeitscheibe in der mittels des Durchflussmesspulses die Fließgeschwindigkeit des Mediums, also dessen Durchsatz, gemessen wird. Dadurch ist der Messbetrieb, in dem die Fließgeschwindigkeit des Mediums gemessen wird, durch das beanspruchte Verfahren nur minimal beeinträchtigt. Das beanspruchte Verfahren erlaubt ferner eine kompakte Bauweise des ersten Durchflusssensors, bei der sich die Ausbreitungshauptrichtungen des Ultraschallpulses und des Durchflussmesspulses kreuzen.

Des Weiteren kann der Ultraschallpuls, der im zweiten Schritt ausgesendet wird, eine Bandbreite von 25 kHz bis 8 MHz, bevorzugt von 40 kHz bis 6 MHz, weiter bevorzugt von 50 kHz bis 4 MHz aufweisen. Alternativ oder ergänzend kann der Ultraschallpuls eine Pulsdauer von 0,1 µs bis 5,0 ms, bevorzugt von 0,15 µs bis 3 ms, besonders bevorzugt von 0,25 µs bis 1,0 ms aufweisen. Die Erfindung basiert unter anderem auf der überraschenden Erkenntnis, dass ein entsprechend breitbandiger und kurzer Ultraschallpuls im zweiten Schritt auch ein Ultraschallecho ergibt, das eine präzise Ermittlung der Rohrwandstärke ermöglicht. Insbesondere wird bei einem derartigen Ultraschallpuls auch bei einem Aussenden in Diagonalrichtung ein hinreichendes Ultraschallecho reflektiert, das die Ermittlung der Rohrwandstärke erlaubt.

In einer weiteren Ausführungsform des beanspruchten Verfahrens kann der dritte Schritt unter Berücksichtigung einer Angabe über ein Material der Rohrwandung durchgeführt werden.

Durch das Material der Rohrwandung wird die Schallgeschwindigkeit in der Rohrwandung im Wesentlichen bestimmt. Die Angabe über das Material der Rohrwandung kann über eine Benutzereingabe unmittelbar bereitgestellt werden und/oder durch eine Angabe über den Bautyp des Rohrs, die beispielsweise in der Auswertungseinheit speicherbar ist. Alternativ oder ergänzend kann auch eine Angabe über eine Anbindung des ersten Durchflusssensors an das Rohr berücksichtigt werden. In Abhängigkeit von der Anbindung des ersten Durchflusssensors ans Rohr kann beispielsweise eine zu erwartende Intensität des Ultraschallechos vorgegeben werden.

Darüber hinaus kann im beanspruchten Verfahren anhand der im dritten Schritt ermittelten Rohrwandstärke auch eine vorliegende Korrosion des Rohrs oder eine Verunreinigung des Rohrs ermittelt werden. Insbesondere ist auch das Ausmaß der Korrosion bzw. der Verunreinigung ermittelbar. Hierzu wird die im dritten Schritt ermittelte Rohrwandstärke mit historischen Werten für die Rohrwandstärke verglichen. Insbesondere kann zwischen der im dritten Schritt ermittelten Rohrwandstärke und zumindest einem historischen Wert für die Rohrwandstärke eine Differenz gebildet werden. Wenn die Differenz einen einstellbaren Schwellenwert betragsmäßig überschreitet, kann an einen Benutzer eine Warnung ausgegeben werden. Hierdurch sind erforderliche Wartungsvorgänge frühzeitig erkennbar, wodurch Ausfallzeiten von Prozessanlagen, in denen das beanspruchte Verfahren durchgeführt wird, reduzierbar sind.

Die zugrundeliegende Aufgabenstellung wird auch durch eine erfindungsgemäße Auswertungseinheit gelöst, die in einem Durchflussmesssystem einsetzbar ist, das zumindest einen ersten Durchflusssensor aufweist. Die Auswertungseinheit ist zu einem Empfangen und Auswerten von Messsignalen vom ersten Durchflusssensor geeignet. Ferner kann die Auswertungseinheit zu einem Ausgeben eines ermittelten Durchflusses eines Mediums in einem Rohr ausgebildet sein, an dem das Durchflusssystem montierbar ist. Erfindungsgemäß ist die Auswertungseinheit dazu ausgebildet, mittels zumindest einer Ausführungsform des oben skizzierten Verfahrens kalibriert zu werden. Dementsprechend sind die Merkmale des Verfahrens und/oder des im Folgenden beschriebenen Durchflussmesssystems auf die Auswertungseinheit übertragbar. Die Auswertungseinheit kann als lokale Auswertungseinheit ausgebildet sein, die in einem der Durchflusssensoren aufgenommen ist. Alternativ kann die Auswertungseinheit auch als Industriesteuerung, wie beispielsweise eine sogenannte Speicherprogrammierbare Steuerung, als Leitrechner, als Computer-Cloud oder als Kombination hieraus ausgebildet sein.

Die skizzierte Aufgabenstellung wird auch durch ein erfindungsgemäßes Durchflussmesssystem gelöst. Das Durchflussmesssystem umfasst einen ersten und einen zweiten Durchflusssensor, die auf einem Rohr montierbar sind um den Durchfluss eines Mediums im Rohr nichtinvasiv zu messen. Der erste Durchflussmesser umfasst einen ersten Ultraschallkopf zu einem Aussenden eines Durchflussmesspulses. Der zweite Durchflusssensor ist zu einem Empfangen eines Echos des Durchflussmesspulses ausgebildet. Der erste und zweite Durchflusssensor wirken zur Ermittlung des Durchflusses des Mediums im Rohr zusammen, beispielsweise über eine Auswertungseinheit. Erfindungsgemäß ist der erste Durchflusssensor mit einem zweiten Ultraschallkopf versehen, der zu einem Ermitteln eines Rohrinnendurchmessers ausgebildet ist. Der zweite Ultraschallkopf kann beispielsweise dazu ausgebildet sein, zumindest eine Ausführungsform des oben skizzierten Verfahrens durchzuführen. Die beschriebenen Merkmale des Verfahrens sind daher unmittelbar auf das erfindungsgemäße Durchflussmesssystem übertragbar. Erfindungsgemäß weist das Durchflussmesssystem mit einer Auswertungseinheit nach einer der oben skizzierten Ausführungsformen auf.

Des Weiteren kann der zweite Ultraschallkopf zu einem Aussenden eines Ultraschallpulses und/oder Empfangen eines Ultraschallechos ausgebildet sein. Der Ultraschallpuls ist durch den zweiten Ultraschallkopf unmittelbar in die Rohrwandung einleitbar. Der Ultraschallpuls wird in einem gegenüberliegenden Bereich an der Innenseite der Rohrwandung als Ultraschallecho reflektiert und ist durch den zweiten Ultraschallkopf empfangbar. Der zweite Ultraschallkopf kann zu einem Aussenden des Ultraschallpulses, bezogen auf eine Rohrachse, in Diagonalrichtung oder im Wesentlichen in eine Radialrichtung ausgebildet sein.

In einer Ausführungsform des beanspruchten Durchflussmesssystems weist der erste Durchflusssensor zumindest einen Ultraschallreflektor auf, der zu einem Umlenken des vom ersten und/oder zweiten Ultraschallkopfs ausgesendeten Ultraschallpulses ausgebildet ist. Der Ultraschallreflektor kann derart angeordnet sein, dass der Ultraschallpuls im Wesentlichen in eine Radialrichtung in die Rohrwandung gesendet wird. Dadurch ist eine wirksame Reflexion des Ultraschallpulses als Ultraschallecho von einem gegenüberliegenden Bereich an der Innenseite der Rohrwandung zurück zum zweiten Ultraschallkopf gewährleistet. Ein derart klares Ultraschallecho wiederum erlaubt eine präzise Ermittlung des Rohrinnendurchmessers.

Darüber hinaus kann der Ultraschallreflektor teiltransparent oder als schaltbarer Ultraschallreflektor ausgebildet sein. Mittels eines teiltransparenten Ultraschallreflektors ist lediglich der Ultraschallpuls bzw. das Ultraschallecho umlenkbar, nicht jedoch der Durchflussmesspuls. Der Durchflussmesspuls passiert stattdessen den teiltransparenten Ultraschallreflektor. Dadurch kann der Ultraschallreflektor erhöhte Abmessungen aufweisen und in einfacher Weise kosteneffizient hergestellt werden. Alternativ kann der schaltbare Ultraschallreflektor in seiner Umlenkungswirkung ein- und ausgeschaltet werden. Beispielsweise ist so ein Zeitscheibenbetrieb umsetzbar, in dem der erste und zweite Ultraschallkopf nah aneinander positioniert sind und im Wesentlichen in die gleiche Richtung aussenden. Mittels derartiger Reflektoren können unterschiedliche Varianten des oben skizzierten Verfahrens zuverlässig umgesetzt werden. Das beanspruchte Durchflussmesssystem erlaubt es, auch mehrere Ausführungsformen des beanspruchten Verfahrens kosteneffizient umzusetzen.

Dadurch ist das beanspruchte Durchflussmesssystem in einfacher Weise an eine Vielzahl an Anwendungsfällen anpassbar. Ferner wird die eingangs beschriebene Aufgabe durch ein erfindungsgemäßes Computerprogrammprodukt gelöst. Das Computerprogrammprodukt ist dazu ausgebildet, ein Betriebsverhalten eines Durchflussmesssystems zu simulieren. Das Computerprogrammprodukt umfasst erfindungsgemäß dazu Befehle, die einen Computer dazu veranlassen, das Betriebsverhalten des Durchflussmesssystems zu simulieren.

Insbesondere kann das Computerprogrammprodukt dazu eingerichtet sein, das Betriebsverhalten des Durchflussmesssystems zu simulieren, indem dessen Aufbau darin fest vorgegeben ist, also ein Abbild dessen hinterlegt ist. Alternativ kann das Betriebsverhalten auch durch ein abstrahiertes Rechenmodell dargestellt werden, das vom räumlichen Aufbau des Durchflussmesssystems unabhängig ist. Weiter alternativ kann das Betriebsverhalten auch anhand einer Kombination hieraus ermittelt werden. Das zu simulierende Durchflussmesssystem ist erfindungsgemäß nach einer der oben beschriebenen Ausführungsformen ausgebildet. Das Computerprogrammprodukt kann zur Simulation über ein Physik-Modul verfügen, in dem das Durchflussmesssystem abgebildet ist und beispielsweise dessen ultraschall-akustisches oder signaltechnisches Verhalten unter einstellbaren Betriebsbedingungen nachstellbar ist. Beispielsweise gehören zu den einstellbaren Betriebsbedingungen eine Temperatur des Mediums im Rohr, eine vorliegende Schallgeschwindigkeit im Medium, eine Viskosität des Mediums, eine Fließgeschwindigkeit des Medium, ein Druck des Medium, ein Strömungsverhalten, insbesondere ein Verwirbelungsverhalten oder ein Fließgeschwindigkeitsprofil. Hierzu kann das Computerprogrammprodukt über eine Datenschnittstelle verfügen, über die entsprechende Daten über eine Benutzereingabe und/oder andere simulationsgerichtete Computerprogrammprodukte vorgebbar sind. Das Computerprogrammprodukt kann auch über eine Datenschnittstelle zum Ausgeben von Simulationsresultaten an einen Benutzer und/oder andere simulationsgerichtete Computerprogrammprodukte verfügen. Mittels des Computerprogrammprodukts sind beispielsweise von Ultraschallköpfen erfasste Signallaufzeiten, oder andere Sensorwerte einer Anlage, in der das Durchflussmesssystem eingesetzt ist, auf Plausibilität prüfbar. Dadurch kann unter anderem eine defekte Komponente im Durchflussmesssystem, beispielsweise ein defekter Ultraschallkopf, identifiziert werden. Insbesondere ist identifizierbar, ob eine ermittelte Korrosion, Verunreinigung oder Oberflächenrauigkeit einer Innenseite der Rohrwandung nach einer bekannten Betriebsdauer plausibel vorliegen kann, oder ob eine defekte Komponente im Durchflussmesssystem zu erwarten ist. Die Erfindung beruht unter anderem auch auf der überraschenden Erkenntnis, dass die oben skizzierten Verfahren bei relativ geringem Rechenaufwand mit gesteigerter Präzision modellierbar sind, beispielsweise das Reflexionsverhalten an der dem ersten Durchflusssensor gegenüberliegenden Rohrwandung. Dementsprechend wird durch das erfindungsgemäße Computerprogrammprodukt eine umfangreiche und gleichzeitig rechenkapazitätsschonende Möglichkeit zum Überwachen und/oder Erproben eines entsprechenden Durchflussmesssystems zur Verfügung gestellt. Das Computerprogrammprodukt ist erfindungsgemäß als sogenannter Digitaler Zwilling ausgebildet sein, wie beispielsweise in der Druckschrift US 2017/286572 A1 näher beschrieben. Der Offenbarungsgehalt von US 2017/286572 A1 wird durch Verweisung in die vorliegende Anmeldung mit einbezogen. Das Computerprogrammprodukt kann monolithisch ausgebildet sein, also vollständig auf einer Hardwareplattform ausführbar. Alternativ kann das Computerprogrammprodukt modular ausgebildet sein und eine Mehrzahl an Teilprogrammen umfassen, die auf separaten Hardwareplattformen ausführbar sind und über eine kommunikative Datenverbindung zusammenwirken. Insbesondere kann das Computerprogrammprodukt in einer Computer-Cloud ausführbar ausgebildet sein. Ferner kann durch das erfindungsgemäße Computerprogrammprodukt ein Durchflussmesssystem per Simulation erprobt und/oder optimiert werden, beispielsweise bei einer geplanten Nachrüstung in einer Prozessanlage.

Darüber hinaus wird die eingangs beschriebene Aufgabenstellung durch eine erfindungsgemäße Verwendung eines Durchflussmesssystems gelöst. Das Durchflussmesssystem ist zur Durchführung eines Messbetriebs an einem Rohr befestigt, das von einem Medium durchströmt wird. Durch den Messbetrieb ist eine Fließgeschwindigkeit des Mediums, und damit dessen Durchsatz, zu messen. Erfindungsgemäß wird das Durchflussmesssystem, das zumindest einen ersten Durchflusssensor umfasst, während des Messbetriebs auch dazu eingesetzt, eine Rohrwandstärke des Rohrs zu ermitteln. Die Messgenauigkeit des Messbetriebs wird unter anderem durch die Rohrwandstärke, die als Kalibrierparameter in einer Auswertungseinheit des Durchflussmesssystems gespeichert ist, beeinflusst. Das Durchflussmesssystem wird dementsprechend zu einem einstellbaren mitlaufenden Nachkalibrieren während des Messbetriebs verwendet. Unter einem mitlaufenden Nachkalibrieren ist hierbei ein Ermitteln der Rohrwandstärke während des Messbetriebs zu verstehen. Insbesondere ist durch einen Benutzer einstellbar, in welchen Intervallen das Nachkalibrieren durch Ermitteln der Rohrwandstärke als Kalibrierparameter durchzuführen ist. Dazu kann das Durchflussmesssystem gemäß zumindest einer der oben skizzierten Ausführungsformen ausgebildet sein.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch einen Aufbau eines beanspruchten Durchflussmesssystems in einem Längsschnitt und einem Querschnitt;
- FIG 2: eine Detailansicht eines ersten Durchflusssensors in einer zweiten Ausführungsform des beanspruchten Durchflussmesssystems im Längsschnitt;
- FIG 3: eine Detailansicht eines ersten Durchflusssensors in einer dritten Ausführungsform des beanspruchten Durchflussmesssystems im Längsschnitt;
- FIG 4: eine Detailansicht eines ersten Durchflusssensors in einer vierten Ausführungsform des beanspruchten Durchflussmesssystems im Längsschnitt;
- FIG 5: eine Detailansicht eines ersten Durchflusssensors in einer fünften Ausführungsform des beanspruchten Durchflussmesssystems im Längsschnitt;
- FIG 6: eine Darstellung zu einer Ermittlung einer Oberflächenrauigkeit im beanspruchten Verfahren im Längsschnitt.

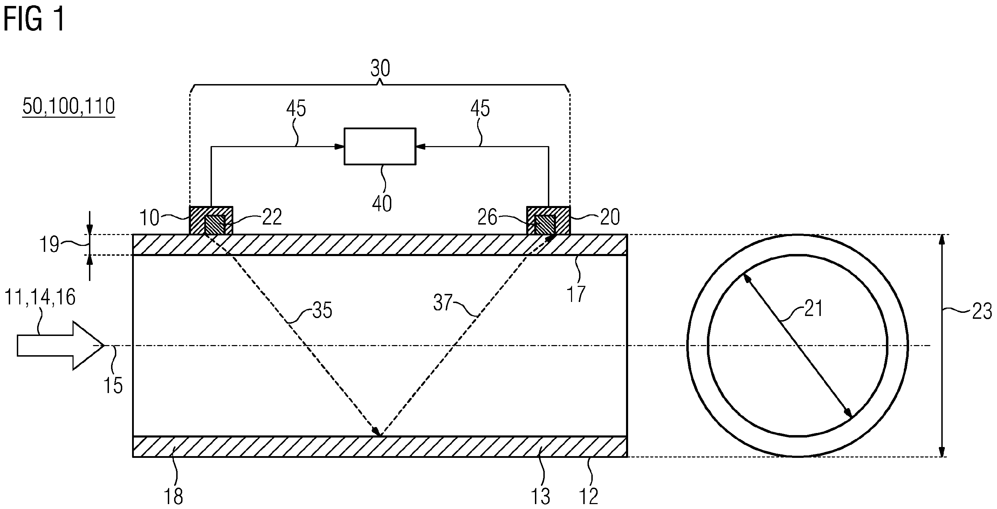

In FIG 1 ist schematisch ein Aufbau eines beanspruchten Durchflussmesssystems 30 im Längsschnitt gezeigt. Das Durchflussmesssystem 30 befindet sich hierbei in einem Stadium eines beanspruchten Verfahrens 100 zum Kalibrieren des Durchflussmesssystems 30. Das Durchflussmesssystem 30 umfasst einen ersten Durchflusssensor 10 und einen zweiten Durchflusssensor 20, die auf einem Rohr 12 montiert sind. Der erste und zweite Durchflusssensor 10, 20 sind mit einer Auswertungseinheit 40 gekoppelt, die auch zum Durchflussmesssystem 40 gehört. Das Durchflussmesssystem 30 befindet sich in einem aktiven, also funktionstüchtigen, Zustand, so dass ein erster Schritt 110 des beanspruchten Verfahrens 100 in FIG 1 abgeschlossen ist. Das Rohr 12 weist eine Rohrwandung 13 auf, durch die ein Medium 11 umschlossen ist, das entlang einer Rohrachse 15 durch das Rohr 12 fließt. Das Medium 11 weist eine Temperatur 14 und eine Fließgeschwindigkeit 16 auf. In einem Messbetrieb des Durchflussmesssystems 30 ist die Fließgeschwindigkeit 16 des Mediums 11 zu ermitteln um basierend hierauf den Durchfluss an Medium 11 zu berechnen. Die Rohrwandung 13 weist eine Rohrwandstärke 19 und einen Rohrinnendurchmesser 21 auf, durch die sich eine Rohrwandstärke 19 ergibt, wie in FIG 1 rechts im Querschnitt gezeigt. FIG 1 zeigt einen Messbetrieb, in dem durch einen ersten Ultraschallkopf 22 im ersten Durchflusssensor 10 ein Durchflussmesspuls 35 in das Medium 11 gesendet wird. Ein Echo 37 des Durchflussmesspulses 35 wird an einer dem ersten und zweiten Durchflusssensor 10, 20 gegenüberliegenden Rohrwandung 18 reflektiert. Das Echo 37 wird von einem weiteren Ultraschallkopf 26, der im zweiten Durchflusssensor 20 angeordnet ist, empfangen. Für den Durchflussmesspuls 35 und sein Echo 37 ergibt sich eine Signallaufzeit, die zu einer Ermittlung der Fließgeschwindigkeit 16 auswertbar ist. Hierzu werden Messsignale 45 vom ersten und zweiten Durchflusssensor 10, 20 an die Auswertungseinheit 40 übertragen. Im in FIG 1 gezeigten Stadium ist das Durchflussmesssystem 30 darauf vorbereitet, weitere Schritte des Verfahrens 100, wie im Folgenden beschrieben, durchzuführen. Ferner wird das Betriebsverhalten des Durchflussmesssystems 30 durch ein nicht näher gezeigten Computerprogrammprodukt 50 simuliert, das als Digitaler Zwilling zumindest des ersten Durchflusssensors 10 ausgebildet ist.

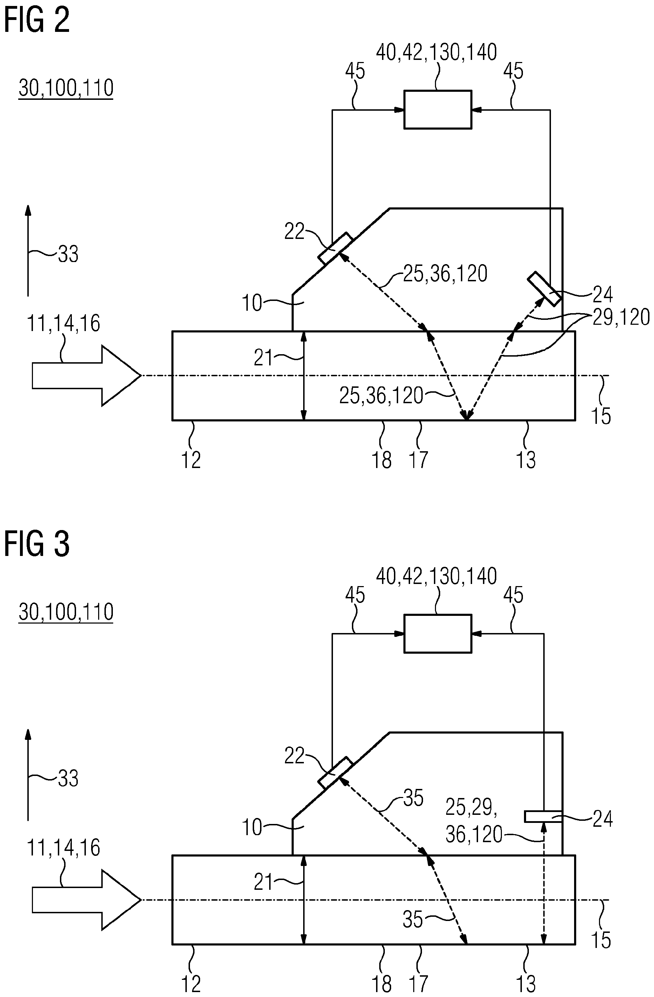

Eine längsgeschnittene Detailansicht des ersten Durchflusssensors 10 nach einer ersten Ausführungsform des beanspruchten Durchflussmesssystems 30 ist in FIG 2 abgebildet. Der erste Durchflusssensor 10 umfasst einen ersten Ultraschallkopf 22, der zu einem Aussenden eines nicht gezeigten Durchflussmesspulses 35 geeignet ist. Der erste Durchflusssensor 10 ist, wie auch in FIG 1 dargestellt, auf dem Rohr 12, also dessen Rohrwandung 13 montiert und in einem aktiven Betriebszustand. Der erste Schritt 110 des Verfahrens 100 ist nach FIG 2 damit bereits abgeschlossen. Der erste Ultraschallkopf 22 ist auch dazu ausgebildet, in einem zweiten Schritt 120 des Verfahrens 100 einen Ultraschallpuls 25 auszusenden, anhand dessen die Rohrwandstärke 19 zu ermitteln ist. Der Ultraschallpuls 25 breitet sich entlang einer Ausbreitungshauptrichtung 36 aus, die in FIG 2 durch die Pfeilrichtungen dargestellt ist. Der Ultraschallpuls 25 wird an der Rohrwandung 13 abgelenkt und tritt bezogen auf die Rohrachse 15 in einer Diagonalrichtung in die Rohrwandung 13 ein. Ferner wird der Ultraschallpuls 25 in einem gegenüberliegenden Bereich an einer Innenseite 17 der Rohrwandung 18 als Ultraschallecho 29 reflektiert. Das Ultraschallecho 29 wird bei einem Austritt aus der Rohrwandung 13 ebenfalls abgelenkt. Das Ultraschallecho 29 wird durch einen zweiten Ultraschallkopf 24, der im ersten Durchflusssensor 10 angeordnet ist, empfangen. Ausgehend von Messsignalen 45 vom ersten und zweiten Ultraschallkopf 22, 24 wird in der Auswertungseinheit 40 die Rohrwandstärke 19 ermittelt. Dazu wird anhand der Messsignale 45 eine Signallaufzeit des Ultraschallpulses 25 und seines Ultraschallechos 29 ermittelt. Auf Basis der Temperatur 14 des Mediums 11 und einer Angabe über das Material der Rohrwandung 13 ist eine Schallgeschwindigkeit in der Rohrwandung 13 ermittelbar. Anhand dessen ist ausgehend von der Signallaufzeit des Ultraschallpulses 25 und seines Ultraschallechos 29 vom ersten Ultraschallkopf 22 zum zweiten Ultraschallkopf 24 die Rohrwandstärke 19 im dritten Schritt 130 ermittelbar. Zusätzlich kann unter Berücksichtigung eines Rohraußendurchmessers 23 auch der Rohrinnendurchmesser 21 im dritten Schritt 130 ermittelt werden. Hierbei kann ebenso das Ablenkungsverhalten des Ultraschallpulses 25 und/oder des Ultraschallechos 29 bei Eintritt bzw. Austritt aus der Rohrwandung 13 berücksichtigt werden. Die ermittelte Rohrwandstärke 19 und/oder der Rohrinnendurchmesser 21 wird in einem vierten Schritt 140 in der Auswertungseinheit 40 als Kalibrierparameter gespeichert. Kalibrierparameter wie die Rohrwandstärke 19 und/oder der Rohrinnendurchmesser 21 sind in einem Messbetrieb, wie beispielsweise in FIG 1 gezeigt, nutzbar, um den Durchsatz an Medium 11 zu ermitteln, also im Wesentlichen dessen Fließgeschwindigkeit 16. Das in FIG 2 gezeigte Verfahren 100 zum Kalibrieren ist in einfacher Weise in einen Messbetrieb wie in FIG 1 integrierbar, beispielsweise durch einen Zeitscheibenbetrieb. Eine Veränderung der Rohrwandstärke 19, und damit des Rohrinnendurchmessers 21, kann durch Vergleich mit historischen Werten 42 für diese ermittelt werden. Dazu sind entsprechende historische Werte 42 für die Rohrwandstärke 19 bzw. den Rohrinnendurchmesser 21 in der Auswertungseinheit 40 gespeichert. Eine Zunahme des Rohrinnendurchmessers 21 zeigt somit eine Korrosion an einer Innenseite 17 der Rohrwandung 13 an. Eine Abnahme des Rohrinnendurchmesser 21 hingegen zeigt eine Verunreinigung des Rohrs 12 an, durch dieses verengt wird. Derartige Zustände sind über die Auswertungseinheit 40 einem Benutzer anzeigbar.

Des Weiteren wird in der Ausführungsform nach FIG 2 eine Oberflächenrauigkeit 27 an der Innenseite 17 der Rohrwandung 13 durchgeführt. Dabei wird ein Ultraschallpuls 25 vom ersten Ultraschallkopf 22 in die Rohrwandung 13 ausgesendet. Ein Teil des Ultraschallpulses 25 wird an der Innenseite 17 der Rohrwandung 13 infolge der dortigen Oberflächenrauigkeit 27 als Ultraschallecho 29 zum ersten Ultraschallkopf 25 reflektiert. Das von ersten Ultraschallkopf 22 empfangene Ultraschallecho 29 weist gegenüber dem ausgesendeten Ultraschallpuls 25 eine reduzierte Intensität auf. Der Ultraschallpuls 25 wird durch die Oberflächenrauigkeit 27 gestreut, so dass das vom zweiten Ultraschallkopf 24 empfangene Ultraschallecho 29 gegenüber dem ausgesendeten Ultraschallpuls 25 eine reduzierte Intensität aufweist. Die Intensitäten der Ultraschallechos 29, die vom ersten bzw. zweiten Ultraschallkopf 22, 24 empfangen werden, werden erfasst und als Messsignale 45 an die Auswertungseinheit 40 gesendet. Durch deren Auswertung wird die Oberflächenrauigkeit 27 an der Innenseite 17 der Rohrwandung 13 erfasst. Das Betriebsverhalten des ersten Durchflusssensors 10 ist über ein nicht näher gezeigtes Computerprogrammprodukt 50 simulierbar, das als Digitaler Zwilling zumindest des ersten Durchflusssensors 10 ausgebildet ist.

In FIG 3 ist ein erster Durchflusssensor 10 in einer zweiten Ausführungsform des beanspruchten Durchflussmesssystems 30 in einem Längsschnitt schematisch dargestellt. FIG 3 geht davon aus, dass ein erster Schritt 110 des beanspruchten Verfahrens 100 bereits abgeschlossen ist, in dem das Durchflussmesssystem 30 in einem aktiven Betriebszustand bereitgestellt wird. Der erste Durchflusssensor 10 weist einen ersten Ultraschallkopf 22 auf, der in Bezug auf die Rohrachse 15 des Rohrs 12 im Wesentlichen diagonal ausgerichtet ist. Der erste Ultraschallkopf 22 ist derart im ersten Durchflusssensor 10 angeordnet, dass ein Durchflussmesspuls 35 in einer Diagonalrichtung in die Rohrwandung 13 gelenkt wird. Beim Eintritt in die Rohrwandung 13 wird der Durchflussmesspuls 35 abgelenkt. Der Durchflussmesspuls 35 gehört zum Messbetrieb des Durchflussmesssystems 30. Zum Durchflussmesspuls 35 werden Messignale 45 an eine Auswertungseinheit 40 gesendet. Des Weiteren weist der erste Durchflusssensor 10 einen zweiten Ultraschallkopf 24 auf, der in Axialrichtung, also entlang der Rohrachse 15, zum ersten Ultraschallkopf 22 beabstandet angeordnet ist. Der zweite Ultraschallkopf 24 befindet sich zwischen dem ersten Ultraschallkopf 22 und dem in FIG 3 nicht dargestellten zweiten Durchflusssensor 20. Der zweite Ultraschallkopf 24 ist dazu ausgebildet, einen Ultraschallpuls 25 im Wesentlichen in eine Radialrichtung 33 in die Rohrwandung 13 zu senden. Dies erfolgt in einem zweiten Schritt 120 des beanspruchten Verfahrens 100. Der Ultraschallpuls 25 durchläuft das Medium 11 und wird in einem gegenüberliegenden Bereich an einer Innenseite 17 der Rohrwandung 13 als Ultraschallecho 29 reflektiert. Der zweite Ultraschallkopf 24 ist dazu ausgebildet, das Ultraschallecho 29 im zweiten Schritt 120 auch zu empfangen. Eine Ablenkung des Ultraschallpulses 25 beim Eintritt in die Rohrwandung 13 und beim Austritt aus der Rohrwandung 13 ist minimal und in FIG 3 nicht dargestellt. Der Ultraschallpuls 25 und das Ultraschallecho 29 weist entgegengesetzte Ausbreitungshauptrichtungen 36 auf, die in FIG 3 durch Pfeile dargestellt sind. Der zweite Ultraschallkopf 24 ist dazu geeignet, im Zusammenspiel mit der Auswertungseinheit 40 eine Signallaufzeit des Ultraschallpulses 25 und des Ultraschallechos 29 zu messen. Dazu werden entsprechende Messsignale 45 an die Auswertungseinheit 40 übertragen. Die Auswertungseinheit 40 ist auch dazu ausgebildet, eine Temperatur 14 des Mediums 11 und eine Angabe über das Material des Mediums 11 zu berücksichtigen, um eine vorliegende Schallgeschwindigkeit im Medium 11 zu bestimmen. Anhand dessen, der Signallaufzeit des Ultraschallpulses 25 und seines Ultraschallechos 29 und einer Einbauposition des zweiten Ultraschallsensors 24 ist zumindest eine Rohrwandstärke 19 in einem dritten Schritt 130 ermittelbar. Anhand dessen kann im dritten Schritt 130 auch der Rohrinnendurchmesser 19 ermittelt werden. Dies erfolgt durch eine Berechnung in der Auswertungseinheit 40. Die ermittelte Rohrwandstärke 19 wird in einem vierten Schritt 140 des Verfahrens 100 als Kalibrierparameter in der Auswertungseinheit 40 gespeichert. Insbesondere wird die ermittelte Rohrwandstärke 19 bzw. der ermittelte Rohrinnendurchmesser 21 bei einer Ermittlung des Durchsatzes an Medium 11 durch das Rohr 12 berücksichtigt. Durch die im Wesentlichen radiale Ausrichtung des zweiten Ultraschallkopfs 24 wird ein klares Ultraschallecho 29 erzeugt, was eine präzise Ermittlung der Rohrwandstärke 19 erlaubt. Der zweite Ultraschallkopf 24 ist unabhängig vom ersten Ultraschallkopf 22 dazu geeignet, das beanspruchte Verfahren 100 umzusetzen. In der Auswertungseinheit 40 sind historische Werte 42 zur Rohrwandstärke 19 und/oder zum Rohrinnendurchmesser 21 gespeichert. Durch Vergleichen der ermittelten Rohrwandstärke 19 und/oder des ermittelten Rohrinnendurchmessers 21 mit den zugehörigen historischen Werten 42 ist eine Korrosion an der Innenseite 17 der Rohrwandung 13 oder eine Verunreinigung an der Innenseite 17 der Rohrwandung 13 erkennbar. Das Verfahren 100 erlaubt somit insgesamt eine schnelle präzise Kalibrierung des Durchflussmesssystems 30, sondern auch eine zuverlässige Diagnose über den Zustand des Rohrs 12. Das Betriebsverhalten des ersten Durchflusssensors 10 ist über ein nicht näher gezeigtes Computerprogrammprodukt 50 simulierbar, das als Digitaler Zwilling zumindest des ersten Durchflusssensors 10 ausgebildet ist.

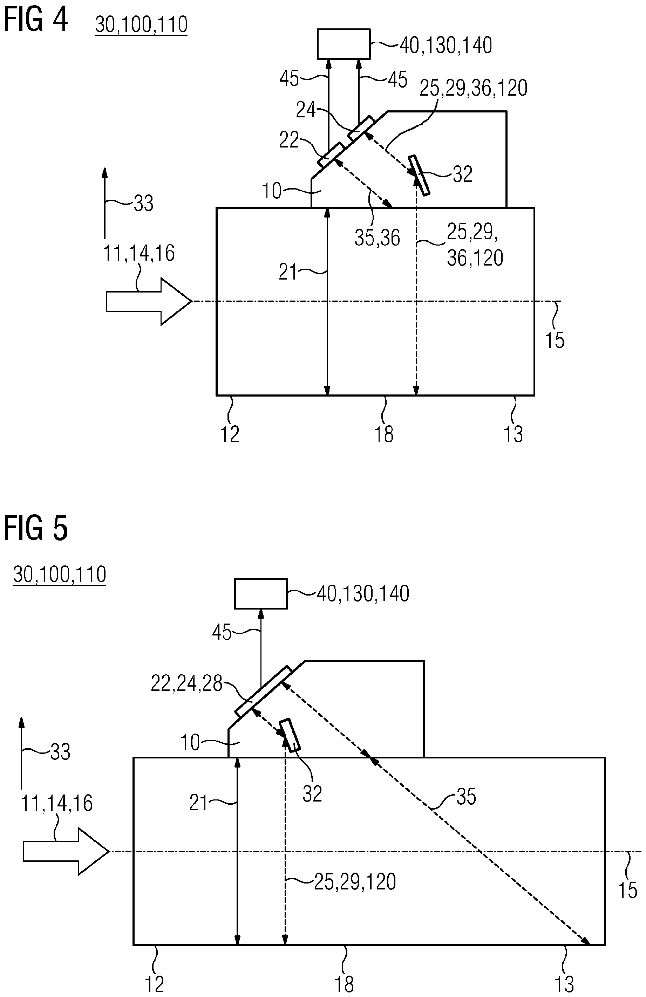

Ein erster Durchflusssensor 10 gemäß einer dritten Ausführungsform des beanspruchten Durchflussmesssystems 30 ist in FIG 4 schematisch in einem Längsschnitt dargestellt. Der erste Durchflusssensor 10 weist einen ersten Ultraschallkopf 22 auf, der dazu ausgebildet ist, in einem Messbetrieb einen Durchflussmesspuls 35 in das Medium 11 auszusenden. Das Durchflussmesssystem 30 nach FIG 1 befindet sind in einem aktiven Betriebszustand, so dass der erste Schritt 110 des beanspruchten Verfahrens 100 bereits abgeschlossen ist. Der erste Ultraschallkopf 22 ist, bezogen auf die Ausbreitungshauptrichtung 36 des Durchflussmesspulses 35, im Wesentlichen diagonal zur Rohrachse 15 ausgerichtet. Für den Messbetrieb sind Messsignale 45 vom ersten Ultraschallkopf 22 an eine Auswertungseinheit 40 übertragbar. Der erste Durchflusssensor 10 weist auch einen zweiten Ultraschallkopf 24 auf, der im Bereich des ersten Ultraschallkopfs 22 angeordnet ist. Der zweite Ultraschallkopf 24 ist im Wesentlichen parallel zum ersten Ultraschallkopf 22 ausgerichtet. Des Weiteren weist der erste Durchflusssensor 10 einen Ultraschallreflektor 32 auf, der zu einem Umlenken eines Ultraschallpulses 25 vom zweiten Ultraschallkopf 24 angeordnet ist. Der Ultraschallreflektor 32 ist derart ausgerichtet, dass der Ultraschallpuls 25 im Wesentlichen entlang einer Radialrichtung 33 in die Rohrwandung 13 gesendet wird. Der Ultraschallpuls 25 durchläuft die Rohrwandung 13 und wird an einem dem ersten Durchflusssensor 10 gegenüberliegenden Bereich an einer Innenseite 17 der Rohrwandung 13 als Ultraschallecho 29 reflektiert. Das Ultraschallecho 29 wird durch den Ultraschallreflektor 32 zum zweiten Ultraschallkopf 24 gelenkt. Das Aussenden des Ultraschallpulses 25 und Empfangen des Ultraschallechos 29 erfolgt in einem zweiten Schritt 120 des beanspruchten Verfahrens 100. Der zweite Ultraschallkopf 24 ist durch den Ultraschallreflektor 32 in einfach zugänglicher Weise im ersten Durchflusssensor 10 montierbar. Der Aufbau des ersten Durchflusssensors 10 wird so vereinfacht und kosteneffizient gestaltet. Das Aussenden des Ultraschallpulses 25 im Wesentlichen in Radialrichtung 33 führt zu einem klaren Ultraschallecho 29, was eine besonders präzise Ermittlung einer Signallaufzeit erlaubt. Die Signallaufzeit stellt hierbei die Dauer zwischen einem Aussenden des Ultraschallpulses 25 und dem Empfangen des zugehörigen Ultraschallechos 29 dar. Unter Berücksichtigung einer Schallgeschwindigkeit im Material der Rohrwandung 13 und einer Einbauposition des zweiten Ultraschallkopfs 24 ist anhand der Signallaufzeit Rohrwandstärke 19 ermittelbar. Das Ermitteln der Rohrwandstärke 19 erfolgt in einem dritten Schritt 130 des beanspruchten Verfahrens 100. Ferner wird zumindest die ermittelte Rohrwandstärke 19 als Kalibrierparameter in einem vierten Schritt 140 in der Auswertungseinheit 40 gespeichert. Anhand des Rohrwandstärke 19 ist auch unter Berücksichtigung eines Rohraußendurchmessers 23 ein Rohrinnendurchmesser 21 ermittelbar, der ebenso als Kalibrierparameter im vierten Schritt in der Auswertungseinheit 40 speicherbar ist. Zusätzlich können in der Auswertungseinheit 40 historische Werte 42 zur Rohrwandstärke 19 und/oder zum Rohrinnendurchmesser 21 gespeichert sein. Durch Vergleichen einer ermittelten Rohrwandstärke 19 und/oder eines ermitteltes Rohrinnendurchmessers 21 mit den korrespondierenden historischen Werten 42 sind eine Korrosion bzw. eine Verunreinigung an der Innenseite 17 des Rohrs 12 ermittelbar. Eine Erhöhung des Rohrinnendurchmessers 21 wird durch Korrosion der Rohrwandung 13 hervorgerufen, während eine Verringerung des Rohrinnendurchmessers 21 durch eine Verunreinigung an der Innenseite 17 der Rohrwandung 13 hervorgerufen wird. Durch eine solche Verunreinigung wird das Rohr 12 verengt. Die in FIG 4 gezeigte Ausführungsform erlaubt es, das beanspruchte Verfahren 100 zum Kalibrieren in einen Messbetrieb zu integrieren. Dazu können der erste und zweite Ultraschallkopf 22, 24 in einem Zeitscheibenbetrieb betrieben werden. Das beanspruchte Verfahren 100 ist in einfacher Weise in einen Dauerbetrieb des nicht näher gezeigten Durchflussmesssystems 30 einbringbar, so dass dessen Kalibrierung häufig anpassbar ist. Dadurch ist zuverlässig ein exakter Messbetrieb möglich. Das Betriebsverhalten des ersten Durchflusssensors 10 ist über ein nicht näher gezeigtes Computerprogrammprodukt 50 simulierbar, das als Digitaler Zwilling zumindest des ersten Durchflusssensors 10 ausgebildet ist.

Ferner ist in FIG 5 ein erster Durchflusssensor 10 gemäß einer dritten Ausführungsform des beanspruchten Durchflussmesssystems 30 in einem Längsschnitt schematisch gezeigt. Das Durchflussmesssystem 30 ist in FIG 5 bereits am Rohr 12 montiert und befindet sich in einem aktiven Betriebszustand. Der erste Schritt 110 des beanspruchten Verfahrens 100 ist in FIG 5 daher bereits abgeschlossen. Der erste Durchflusssensor 10 weist einen kombinierten Ultraschallkopf 28 auf, der einen ersten und einen zweiten Ultraschallkopf 22, 24 umfasst. Der erste und zweite Ultraschallkopf 22, 24 sind unabhängig voneinander ansteuerbare Abschnitte des kombinierten Ultraschallkopfs 28. Der erste Ultraschallkopf 22 ist derart angeordnet, dass in einem Messbetrieb ein Durchflussmesspuls 35, bezogen auf die Rohrachse 15, im Wesentlichen diagonal in das Medium 11 gesendet wird. Der benachbart zum ersten Ultraschallkopf 22 angeordnete zweite Ultraschallkopf 24 ist dazu ausgebildet, unabhängig vom ersten Ultraschallkopf 22, und damit auch unabhängig vom Durchflussmesspuls 35, einen Ultraschallpuls 25 auszusehen, mittels dessen die Rohrwandstärke 19 des Rohrs 12 zu bestimmen ist. Der Ultraschallpuls 25 wird vom zweiten Ultraschallkopf 24 im Wesentlichen diagonal zur Rohrachse 15 ausgesendet und mittels eines Ultraschallreflektors 32 im Wesentlichen in eine Radialrichtung 33 umgelenkt. Der Ultraschallreflektor 32 ist derart positioniert, dass der Durchflussmesspuls 35 den Ultraschallreflektor 32 passieren kann. Der Ultraschallpuls 25 vom zweiten Ultraschallkopf 24 durchläuft Die Rohrwandung 13 im Wesentlichen in Radialrichtung 33 und wird an einem dem ersten Durchflusssensor 10 gegenüberliegenden Bereich der Rohrwandung 13 an einer Innenseite 17 als Ultraschallecho 29 reflektiert. Das Ultraschallecho 29 erreicht den Ultraschallreflektor 32, durch den das Ultraschallecho 29 zurück zum zweiten Ultraschallkopf 24 gelenkt wird. Das Aussenden des Ultraschallpulses 25 im Wesentlichen in Radialrichtung 33 führt zu einem klaren Ultraschallecho 29, was eine besonders präzise Ermittlung einer Signallaufzeit erlaubt. Die Signallaufzeit stellt hierbei die Dauer zwischen einem Aussenden des Ultraschallpulses 25 und dem Empfangen des zugehörigen Ultraschallechos 29 dar. Dazu sind geeignete Messsignale 45 vom kombinierten Ultraschallkopf 28 an die Auswertungseinheit 40 übertragbar. Unter Berücksichtigung einer Schallgeschwindigkeit im Material der Rohrwandung 13 und einer Einbauposition des zweiten Ultraschallkopfs 24 ist anhand der Signallaufzeit die Rohrwandstärke 19 ermittelbar. Das Ermitteln Rohrwandstärke 19 erfolgt in einem dritten Schritt 130 des beanspruchten Verfahrens 100. Ferner wird die ermittelte Rohrwandstärke 19 als Kalibrierparameter in einem vierten Schritt 140 in der Auswertungseinheit 40 gespeichert. Anhand der Rohrwandstärke 19 ist auch unter Berücksichtigung eines Rohraußendurchmessers 23 ein Rohrinnendurchmesser 21 im dritten Schritt 130 ermittelbar. Zusätzlich können in der Auswertungseinheit 40 historische Werte 42 zur Rohrwandstärke 19 und/oder zum Rohrinnendurchmesser 21 gespeichert sein. Durch Vergleichen einer ermittelten Rohrwandstärke 19 und/oder eines ermitteltes Rohrinnendurchmessers 21 mit den korrespondierenden historischen Werten 42 sind eine Korrosion bzw. eine Verunreinigung an einer Innenseite 17 des Rohrs 12 ermittelbar. Eine Erhöhung des Rohrinnendurchmessers 21 wird durch Korrosion der Rohrwandung 13 hervorgerufen, während eine Verringerung des Rohrinnendurchmessers 21 durch eine Verunreinigung an der Innenseite 17 der Rohrwandung 13 hervorgerufen wird. Durch eine solche Verunreinigung wird das Rohr 12 verengt. Die in FIG 5 gezeigte Ausführungsform erlaubt es, den Messbetrieb mit dem Durchflussmesspuls 35 und das beanspruchte Verfahren 100 im Wesentlichen gleichzeitig durchzuführen. Dadurch ist durchgängig ein Messbetrieb möglich und gleichzeitig ein Nachkalibrieren des Durchflussmesssystems 30. Die Ausführungsform FIG 5 ist deshalb in besonderer Weise für Anwendungen geeignet, in denen eine permanente Durchflussmessung unerlässlich ist und gleichzeitig besondere Präzisionsanforderungen bestehen, die eine im Wesentlichen durchgängige Nachkalibrierung gebieten. Das Betriebsverhalten des ersten Durchflusssensors 10 ist über ein nicht näher gezeigtes Computerprogrammprodukt 50 simulierbar, das als Digitaler Zwilling zumindest des ersten Durchflusssensors 10 ausgebildet ist.

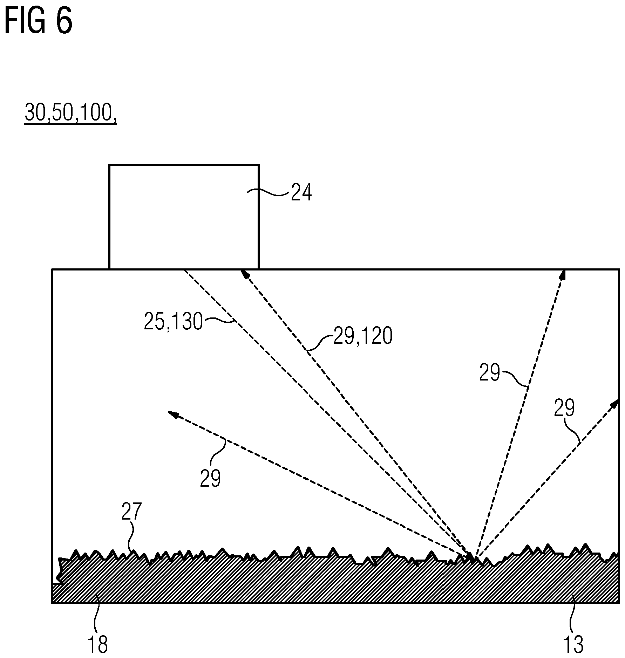

FIG 6 zeigt eine Skizze, die eine Ermittlung einer Oberflächenrauigkeit im beanspruchten Verfahren 100 dem Funktionsprinzip nach zeigt. FIG 6 zeigt schematisch einen zweiten Ultraschallkopf 24, der während des zweiten Schritts 120 des Verfahrens 100 einen Ultraschallpuls 25 diagonal zu einem gegenüberliegenden Bereich an einer Innenseite 17 der Rohrwandung 13 sendet. Der gegenüberliegende Bereich der Rohrwandung 13 weist eine Oberflächenrauigkeit 27 auf, die repräsentativ ist für die Innenseite 17 der Rohrwandung 13. Durch die Oberflächenrauigkeit 27 an der Innenseite 17 wird der Ultraschallpuls 25 als Mehrzahl von Ultraschallechos 29 in unterschiedliche Richtungen reflektiert. Eine Intensität des Ultraschallechos 29, das zum zweiten Ultraschallkopf 24 zurückreflektiert wird ist gegenüber einer Intensität des Ultraschallpulses 25 reduziert. Je geringer die Oberflächenrauigkeit 27 ist, umso geringer ist die Intensität des zum zweiten Ultraschallkopf 24 reflektierten Ultraschallechos 29. Umgekehrt ist die Intensität des zum zweiten Ultraschallkopf 24 reflektierten Ultraschallechos 29 umso höher, je höher ist die Oberflächenrauigkeit 27. Anhand von Wertetabellen oder eines Algorithmus in der nicht näher gezeigten Auswertungseinheit 40 kann, insbesondere unter Berücksichtigung einer Angabe über das Material der Rohrwandung 13, die Oberflächenrauigkeit 27 quantitativ erfasst werden. Dazu wird ein Verhältnis zwischen der Intensität des ausgesendeten Ultraschallpulses 25 und dem empfangenen Ultraschallecho 29 gebildet. Die ermittelte Oberflächenrauigkeit 27 ist als Kalibrierparameter in der Auswertungseinheit 40 speicherbar. Die Oberflächenrauigkeit 27 ist für einen Messbetrieb des nicht näher abgebildeten Durchflussmesssystems 30 insbesondere in die Hagen-Poiseuille-Gleichung einsetzbar. Alternativ oder ergänzend kann die ermittelte Oberflächenrauigkeit 27 auch eingesetzt werden, um einen Fortschritt einer Korrosion der Innenseite 17 der Rohrwandung 13 zu quantifizieren. Das Reflexionsverhalten der Rohrwandung 13 in Abhängigkeit von der Oberflächenrauigkeit 27 gehört zu einem Betriebsverhalten des Durchflusssensors 10, das durch ein Computerprogrammprodukt 50 simulierbar ist. Das Computerprogrammprodukt 50 als Digitaler Zwilling ausgebildet, durch den zumindest die gegenüberliegende Rohrwandung 18 in puncto Oberflächenrauigkeit 27 nachstellbar ist.

## Patentansprüche

1. Verfahren (100) zum Kalibrieren eines Durchflussmesssystems (30), das auf einem Rohr (12) montiert ist, das ein Medium (11) umschließt, umfassend die Schritte:
a) Bereitstellen des Durchflussmesssystems (30), das einen ersten Durchflusssensor (10) umfasst, in einem aktiven Betriebszustand;
b) Aussenden eines Ultraschallpulses (25) in eine Rohrwandung (13) des Rohrs (12) mittels eines ersten oder zweiten Ultraschallkopfs (22, 24) des ersten Durchflusssensors (10) und Empfangen eines Ultraschallechos (29) mittels des zweiten Ultraschallkopfs (24);
c) Ermitteln einer Signallaufzeit des Ultraschallpulses (25) und des Ultraschallechos (29) und Ermitteln einer Rohrwandstärke (19) anhand der Signallaufzeit;
d) Einstellen von Kalibrierparametern des ersten Durchflusssensors (30), wobei die Kalibrierparameter die Rohrwandstärke (19) umfassen,
**dadurch gekennzeichnet, dass** der Ultraschallpuls (25) im Schritt b) zu einer Ermittlung einer Oberflächenrauigkeit (27) einer Innenseite (17) der Rohrwandung (13) in einer Diagonalrichtung ins Medium (11) ausgesendet wird, und eine Intensität des empfangenen Ultraschallechos (29) erfasst wird und mit einer Intensität des ausgesendeten Ultraschallpulses (25) verglichen wird, wobei basierend hierauf die Oberflächenrauigkeit (27) der Innenseite (17) der Rohrwandung (13) ermittelt wird, und auch die ermittelte Oberflächenrauigkeit (27) der Innenseite (17) der Rohrwandung (13) im Schritt d) als Kalibrierparameter eingestellt wird.

2. Verfahren (100) nach Anspruch 1, **dadurch gekennzeichnet, dass** dem zweiten Ultraschallkopf (24) des ersten Durchflusssensors (10) ein Ultraschallreflektor (32) zu einem Umlenken des Ultraschallpulses (25) zugeordnet ist.

3. Verfahren (100) nach einem der Ansprüche 1 oder 2, **dadurch gekennzeichnet, dass** der erste Ultraschallkopf (22) zu einem Aussenden eines Durchflussmesspulses (35) ausgebildet ist.

4. Verfahren (100) nach Anspruch 3, **dadurch gekennzeichnet, dass** der Ultraschallpuls (25) in Schritt b) durch ein elektronisches Filter, insbesondere ein Bandpassfilter, vom Durchflussmesspuls (35) unterschieden wird.

5. Verfahren (100) nach einem der Ansprüche 3 oder 4, **dadurch gekennzeichnet, dass** der Ultraschallpuls (25) gemäß Schritt b) und der Durchflussmesspuls (35) durch zeitversetztes Aussenden unterscheidbar ausgebildet sind.

6. Verfahren (100) nach einem der Ansprüche 1 bis 5, **dadurch gekennzeichnet, dass** der Ultraschallpuls (25) in Schritt b) eine Bandbreite von 25 kHz bis 8 MHz aufweist und/oder eine Pulsdauer von 0,1 µs bis 5,0 ms.

7. Verfahren (100) nach einem der Ansprüche 1 bis 6, **dadurch gekennzeichnet, dass** der Schritt c) auch anhand einer Angabe über ein Material der Rohrwandung (13) und/oder anhand einer Angabe über eine Anbindung des ersten Durchflusssensors (10) an das Rohr (12).

8. Verfahren (100) nach einem der Ansprüche 1 bis 7, **dadurch gekennzeichnet, dass** anhand der im Schritt c) ermittelten Rohrwandstärke (19) eine Korrosion des Rohrs (12) oder eine Verunreinigung des Rohrs (12) ermittelt wird.

9. Durchflussmesssystem (30), umfassend einen ersten und einen zweite Durchflusssensor (10, 20), wobei der erste Durchflusssensor (10) zu einem Aussenden eines Durchflussmesspulses (35) mittels eines ersten Ultraschallkopfs (22) ausgebildet ist und der zweite Durchflusssensor (20) zu einem Empfangen eines Echos (37) des Durchflussmesspulses (35), wobei der erste Durchflusssensor (10) einen zweiten Ultraschallkopf (24) zu einem Ermitteln einer Rohrwandstärke (19) aufweist, wobei das Durchflussmesssystem (30) eine Auswertungseinheit (40) aufweist, die zu einem Empfangen und Auswerten von Messsignalen (45) vom ersten Durchflusssensor (10) ausgebildet ist, **dadurch gekennzeichnet, dass** die Auswertungseinheit (40) zu einem Kalibrieren mittels eines Verfahrens (100) nach einem der Ansprüche 1 bis 8 ausgebildet ist.

10. Durchflussmesssystem (30) nach Anspruch 9, **dadurch gekennzeichnet, dass** die Auswertungseinheit (40) als lokale Auswertungseinheit ausgebildet ist, die in einem der Durchflusssensoren (10, 20) aufgenommen ist oder als Industriesteuerung ausgebildet ist.

11. Computerprogrammprodukt (50), das Befehle umfasst, die einen Computer dazu veranlassen, das Betriebsverhalten eines Durchflussmesssystems (30) zu simulieren, das auf einem Rohr (12) montiert ist, **dadurch gekennzeichnet, dass** das Durchflussmesssystem (30) nach Anspruch 9 oder 10 ausgebildet ist, wobei das Computerprogrammprodukt (50) als Digitaler Zwilling ausgebildet ist und dazu ausgebildet ist, von Ultraschallköpfen (22, 24) des Durchflussmesssystems (30) erfasste Signallaufzeiten oder andere Sensorwerte einer Anlage, in der das Durchflussmesssystem (30) eingesetzt ist, auf Plausibilität zu prüfen.

## Claims

1. Method (100) for calibrating a flow measurement system (30) which is mounted on a tube (12) that contains a medium (11), comprising the steps:
a) provision of the flow measurement system (30), which comprises a first flow rate sensor (10), in an active operating state;
b) emission of an ultrasonic pulse (25) into a tube wall (13) of the tube (12) by means of a first or second ultrasonic head (22, 24) of the first flow rate sensor (10) and receipt of an ultrasonic echo (29) by means of the second ultrasonic head (24);
c) determination of a signal propagation time of the ultrasonic pulse (25) and of the ultrasonic echo (29) and determination of a tube wall thickness (19) using the signal propagation time;
d) setting calibration parameters of the first flow rate sensor (30), wherein the calibration parameters comprise the tube wall thickness (19),
**characterised in that** in step b) the ultrasonic pulse (25) is emitted in a diagonal direction into the medium (11), for the determination of a surface roughness (27) of an inside (17) of the tube wall (13), and an intensity of the received ultrasonic echo (29) is detected and compared to an intensity of the emitted ultrasonic pulse (25), wherein based on this, the surface roughness (27) of the inside (17) of the tube wall (13) is determined, and also the determined surface roughness (27) of the inside (17) of the tube wall (13) is set as a calibration parameter in step d).

2. Method (100) according to claim 1, **characterised in that** the second ultrasonic head (24) of the first flow rate sensor (10) is assigned an ultrasonic reflector (32) for deflection of the ultrasonic pulse (25).

3. Method (100) according to one of claims 1 or 2, **characterised in that** the first ultrasonic head (22) is designed to emit a flow measurement pulse (35).

4. Method (100) according to claim 3, **characterised in that** in step b) the ultrasonic pulse (25) is distinguished from the flow measurement pulse (35) by an electronic filter, in particular a bandpass filter.

5. Method (100) according to one of claims 3 or 4, **characterised in that** the ultrasonic pulse (25) in accordance with step b) and the flow measurement pulse (35) are variously formed by time-delayed emission.

6. Method (100) according to one of claims 1 to 5, **characterised in that** in step b) the ultrasonic pulse (25) has a bandwidth of 25 kHz to 8 MHz and/or a pulse duration of 0.1 µs to 5.0 ms.

7. Method (100) according to one of claims 1 to 6, **characterised in that** step c) is also carried out using information about a material of the tube wall (13) and/or using information about a connection of the first flow rate sensor (10) to the tube (12).

8. Method (100) according to one of claims 1 to 7, **characterised in that** the tube wall thickness (19) determined in step c) is used to determine any corrosion of the tube (12) or any soiling of the tube (12).

9. Flow measurement system (30), comprising a first and a second flow rate sensor (10, 20), wherein the first flow rate sensor (10) is designed to emit a flow measurement pulse (35) by means of a first ultrasonic head (22) and the second flow rate sensor (20) is designed to receive an echo (37) of the flow measurement pulse (35), wherein the first flow rate sensor (10) has a second ultrasonic head (24) for determination of a tube wall thickness (19), wherein the flow measurement system (30) has an evaluation unit (40) which is designed to receive and evaluate measurement signals (45) from the first flow rate sensor (10), **characterised in that** the evaluation unit (40) is designed for calibration by means of a method (100) according to one of claims 1 to 8.

10. Flow measurement system (30) according to claim 9, **characterised in that** the evaluation unit (40) is designed as a local evaluation unit, which is accommodated in one of the flow rate sensors (10, 20) or is designed as an industrial controller.

11. Computer program product (50), which comprises commands that cause a computer to simulate the operating behaviour of a flow measurement system (30) that is mounted on a tube (12), **characterised in that** the flow measurement system (30) is designed according to claim 9 or 10, wherein the computer program product is designed as a digital twin and is designed to check the plausibility of signal propagation times detected by ultrasonic heads (22, 24) of the flow measurement system (30), or other sensor values for an installation in which the flow measurement system (30) is employed.

## Revendications

1. Procédé (100) d'étalonnage d'un système (30) de mesure du débit, qui est monté sur un tuyau (12), entourant un milieu (11), comprenant les stades :
a) on se procure le système (30) de mesure du débit, qui comprend un premier capteur (10) du débit, dans un état de fonctionnement actif ;
b) envoi d'une impulsion (25) d'ultrasons dans une paroi (13) du tuyau (12) au moyen d'une première ou d'une deuxième tête (22, 24) d'ultrasons du premier capteur (10) du débit et réception d'un écho (29) d'ultrasons au moyen de la deuxième tête (24) d'ultrasons ;
c) détermination du temps de propagation du signal de l'impulsion (25) d'ultrasons et de l'écho (29) d'ultrasons et détermination d'une épaisseur (19) de la paroi du tuyau à l'aide du temps de propagation du signal ;
d) établissement de paramètres d'étalonnage du premier capteur (30) du débit, dans lequel les paramètres d'étalonnage comprennent l'épaisseur (19) de la paroi du tuyau,
**caractérisé en ce que**, dans le stade b) pour une détermination d'une rugosité (27) de surface d'une face (17) intérieure de la paroi (13) du tuyau, on envoie l'impulsion (25) d'ultrasons dans une direction en diagonale dans le milieu (11), et on détecte une intensité de l'écho (29) d'ultrasons reçue et on la compare à une intensité de l'impulsion (25) d'ultrasons envoyée, dans lequel, sur cette base, on détermine la rugosité (27) de surface de la face (17) intérieure de la paroi (13) du tuyau, et on établit également, comme paramètres d'étalonnage, la rugosité (27) de surface déterminée de la face (17) intérieure de la paroi (13) du tuyau dans le stade d).

2. Procédé (100) suivant la revendication 1, **caractérisé en ce que** l'on associe, à la deuxième tête (24) d'ultrasons du premier capteur (10) du débit, un réflecteur (32) d'ultrasons pour une déviation de l'impulsion (25) d'ultrasons.

3. Procédé (100) suivant l'une des revendications 1 ou 2, **caractérisé en ce que** la première tête (22) d'ultrasons est constituée pour l'émission d'une impulsion (35) de mesure du débit.

4. Procédé (100) suivant la revendication 3, **caractérisé en ce que** l'on fait la différence entre l'impulsion (25) d'ultrasons dans le stade b) et l'impulsion (35) de mesure du débit par un filtre électronique, en particulier un filtre passe bande.

5. Procédé (100) suivant l'une des revendications 3 ou 4, **caractérisé en ce que** l'impulsion (25) d'ultrasons suivant le stade b) et l'impulsion (35) de mesure du débit sont constituées de manière à pouvoir être différenciées par émission décalée dans le temps.

6. Procédé (100) suivant l'une des revendications 1 à 5, **caractérisé en ce que** l'impulsion (25) d'ultrasons dans le stade b) a une largeur de bande de 25 kHz à 8 MHz et/ou une durée d'impulsion de 0,1 µs à 5,0 ms.

7. Procédé (100) suivant l'une des revendications 1 à 6, **caractérisé en ce que** le stade c) s'effectue aussi à l'aide d'une indication sur un matériau de la paroi (13) du tuyau et/ou à l'aide d'une indication sur une jonction du premier capteur (10) du débit au tuyau (12).

8. Procédé (100) suivant l'une des revendications 1 à 7, **caractérisé en ce que**, à l'aide de l'épaisseur (19) de paroi du tuyau déterminée au stade c), on détermine une corrosion du tuyau (12) ou une souillure du tuyau (12).

9. Système (30) de mesure du débit, comprenant un premier et un deuxième capteurs (10, 20) du débit, dans lequel le premier capteur (10) du débit est constitué pour l'envoi d'une impulsion (35) de mesure du débit au moyen d'une première tête (22) d'ultrasons et le deuxième capteur (20) du débit pour la réception d'un écho (37) de l'impulsion (35) de mesure du débit, dans lequel le premier capteur (10) du débit a une deuxième tête (24) d'ultrasons pour la détermination d'une épaisseur (19) de la paroi du tuyau, dans lequel le système (30) de mesure du débit a une unité (40) d'évaluation, qui est constituée pour la réception et l'évaluation de signaux (45) de mesure du premier capteur (10) de débit, **caractérisé en ce que** l'unité (40) d'évaluation est constituée pour effectuer un étalonnage moyen d'un procédé (100) suivant l'une des revendications 1 à 8.

10. Système (30) de mesure du débit suivant la revendication 9, **caractérisé en ce que** l'unité (40) d'évaluation est constituée sous la forme d'une unité d'évaluation locale, qui est reçue dans l'un des capteurs (10, 20) du débit ou est constituée en commande industrielle.

11. Produit (50) de programme d'ordinateur, qui comprend des instructions, qui font qu'un ordinateur simule le comportement de fonctionnement d'un système (30) de mesure du débit monté sur un tuyau (12), **caractérisé en ce que** le système (30) de mesure du débit est constitué suivant la revendication 9 ou 10, dans lequel le produit (50) de programme d'ordinateur est constitué en double numérique et est constitué pour contrôler la vraisemblance des temps de propagation du signal détecté des têtes (22, 24) d'ultrasons du système (30) de mesure du débit ou d'autres valeurs de capteur d'une installation, dans laquelle le système (30) de mesure du débit est utilisé.
